# EUROPEAN PATENT APPLICATION

(11) **EP 4 485 320 A1**
(43) Date of publication of application: **01.01.2025**
(21) Application number: 24185452.0
(22) Date of filing: 28.06.2024
(51) Int. Cl.: G06Q 20/10, G06Q 20/40, G07F 19/00, G06Q 20/32

(54) **A METHOD FOR CONTROLLING A REMOTE SERVICE**

(30) Priority: 30.06.2023 US 202318217210
(71) Applicant: Digital First Holdings LLC, Atlanta GA 30308 (US)
(72) Inventor: LONG, Justin, Kennesaw 30152 (US)
(74) Representative: Secerna LLP

(57) **Abstract**

A customer transmits a service request message (3) from a user device to a central controller. The central controller determines the time required (4) to process the requested service. The central controller transmits a notification message (5) to the user device when the requested service will be available. A second communication session participant processes (6) the service using the central controller. The second communication session participant then transmits a service execution message (8) to a service provider device to fulfil the requested service. The central controller monitors the location (9) of the user device, and monitors the location (11) of the service provider device. The central controller transmits a guide message (12) to the user device to guide the customer as the customer travels from a first physical location to the service provider device at a third physical location. When the customer arrives at the service provider device, the service provider device authenticates (13) the customer. When the customer has been authenticated, the service provider device fulfils the requested service (14).

## Description

### Field of the Invention

This invention relates to a computer-implemented method for controlling a remote service.

### Background

It is known for a customer to perform various financial actions when located at an automated teller machine (ATM), such as withdrawing cash or lodging cheques. It is also known for a customer to discuss financial products and services with a bank teller in a bank branch, such as requesting a cash withdrawal with a particular denomination of banknotes. However known approaches frequently require a customer to wait for a period of time to receive the requested service.

This invention is aimed at providing an improved method which overcomes at least some of these difficulties.

### Summary

According to the invention there is provided a computer-implemented method for controlling a remote service, the method comprising the steps of:
receiving a service request message from a first communication session participant at a first physical location,
processing a requested service based on the service request message,
wherein the processing is performed by a second communication session participant at a second physical location, and
transmitting a service execution message to a third communication session participant at a third physical location to fulfil the requested service.

When the requested service has been processed by the second communication session participant and the requested service is ready to be fulfilled by the third communication session participant, the first communication session participant may then travel to the third communication session participant to receive the requested service. In this manner the first communication session participant may avoid time being wasted while waiting for the requested service to be processed.

The method may comprise the steps of:
receiving a communication session initiation request message from the first communication session participant, and
initiating a communication session based on the communication session initiation request.

The communication session may be initiated by the second communication session participant. For example if the second communication session participant is a bank teller, the communication session may be initiated by the bank teller if a technical fault at an ATM machine has been detected. As another example if the second communication session participant is a bank teller and the first communication session participant is a customer, the communication session may be initiated by the bank teller in the form of an enquiry from the bank teller to the customer to enquire whether the customer may require assistance. The communication session may be initiated based on a prediction by a machine learning tool of whether the customer may require assistance.

The method may comprise the steps of:
determining a period of time required to process the requested service, and
transmitting a notification message to the first communication session participant when the requested service will be available.

By notifying the first communication session participant when the requested service is ready to be fulfilled by the third communication session participant, the first communication session participant may plan when to travel to the third communication session participant to receive the requested service, and thus may avoid time being wasted while waiting for the requested service to be processed.

The method may comprise the steps of:
determining a location of the first communication session participant,
determining a location of the third communication session participant, and
determining whether the first communication session participant is in proximity to the third communication session participant.

In this manner it is possible to track the location of the first communication session participant relative to the third communication session participant. This enables the timing of when the requested service is provided by the third communication session participant to the first communication session participant to be optimised.

The method may comprise the step of transmitting a guide message to the first communication session participant to guide the first communication session participant to the third communication session participant. This assists the first communication session participant travelling to the third communication session participant to receive the service. The location of the first communication session participant may be determined using a first location identifier when the first communication session participant is located in a first physical area, and the location of the first communication session participant may be determined using a second location identifier when the first communication session participant is located in a second physical area. The method may comprise the step of transitioning from the first location identifier to the second location identifier based on the first communication session participant moving from the first physical area to the second physical area. For example if the first communication session participant is in proximity to the third communication session participant, the requested service may be fulfilled. In this manner the method of the invention results in enhanced security. For example in the case where the service being provided is a financial transaction such as withdrawing cash, the invention prevents the service being intercepted by a fraudulent third party or a potential thief. By tracking the location of the first communication session participant, the invention ensures full control of the service being provided.

The method may comprise the step of:
authenticating the first communication session participant at the third communication session participant,
responsive to the first communication session participant being authenticated, the third communication session participant fulfilling the requested service.

In this manner it is possible to ensure that the correct participant receives the service at the third communication session participant.

The first physical location may be located remotely from the second physical location. The first physical location may be located remotely from the third physical location. The second physical location may be located remotely from the third physical location.

The first communication session participant may comprise a customer. The second communication session participant may comprise at least one of a bank teller, an automated machine, a machine learning tool, a computer program, a sales professional, an insurance agent, a mortgage agent, an underwriter, a loan specialist, a receptionist, or a pooled resource manager. The third communication session participant may comprise at least one of a teller machine, a cash dispenser device, a printer device, a display device, a user interface device, a document scanner device, or an Internet of Things (IoT) enabled device. In one example the third communication session participant may be a service technician accessing a teller machine. The invention enables the service technician to provide advance notification that an action will be taken, such as loading the teller machine with cash.

In another aspect of the invention there is provided a data processing system for controlling a remote service, the system comprising a processor configured to:
receive a service request message from a first communication session participant at a first physical location,
process a requested service based on the service request message, and
transmit a service execution message to a third communication session participant at a third physical location to fulfil the requested service.

When the requested service has been processed and the requested service is ready to be fulfilled by the third communication session participant, the first communication session participant may then travel to the third communication session participant to receive the requested service. In this manner the first communication session participant may avoid time being wasted while waiting for the requested service to be processed.

The invention also provides in another aspect a computer program product stored on a non-transitory computer readable storage medium, the computer program product comprising instructions capable of causing a computer system to perform a method of the invention when the computer program product is executed on the computer system.

### Brief Description of the Drawing

Embodiments of the invention will be described hereinafter, by way of example only, with reference to the accompanying drawings, in which:
Fig. 1 is a flow diagram of a method according to the invention for controlling a remote service,
Fig. 2 is a flow diagram of another method according to the invention for controlling a remote service, and
Fig. 3 is a schematic illustration of another method according to the invention for controlling a remote service.

### Detailed Description

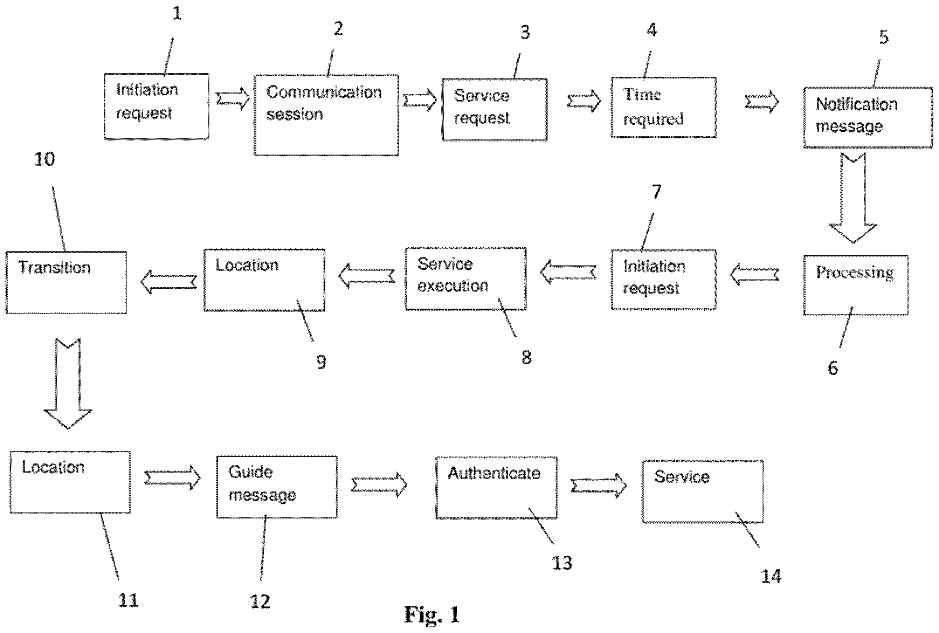

Referring to Fig. 1 there is illustrated a data processing system according to the invention in use. The system may be employed to control a remote service, such as a financial transaction.

The system comprises a user device, a central controller, and a service provider device. In this case the user device is initially at a first physical location, the central controller is at a second physical location, and the service provider device is at a third physical location. The first physical location is located remotely from the second physical location, the first physical location is located remotely from the third physical location, and the second physical location is located remotely from the third physical location. Subsequently the user device travels from the first physical location to the third physical location.

A first communication session participant may transmit a remote communication session initiation request message 1 from the user device to the central controller. In this case the first communication session participant is a customer. The central controller then initiates a communication session 2 between the user device and the central controller based on the communication session initiation request.

The customer may subsequently transmit a service request message 3 from the user device to the central controller, while the customer is in the first physical location located remotely from the second physical location and located remotely from the third physical location. The central controller may require time to perform a requested service. The central controller determines the period of time required 4 to process the requested service. The central controller then transmits a notification message 5 to the user device when the requested service will be available. For example the requested service may be for a special cash withdrawal with cash in large denomination banknotes instead of in small denomination banknotes.

The central controller processes 6 the requested service based on the service request message 3. In particular a second communication session participant processes the requested service using the central controller, while the central controller is in the second physical location located remotely from the first physical location and located remotely from the third physical location. In this case the second communication session participant may be a bank teller, and/or an automated machine, and/or a machine learning tool, and/or a computer program, or the like.

The second communication session participant transmits a communication session initiation request message 7 from the central controller to the service provider device. When the communication session has been established, the service provider device acts as a third communication session participant. The second communication session participant then transmits a service execution message 8 to the service provider device to fulfil the requested service. In this case the third communication session participant may be a teller machine, and/or a cash dispenser device, and/or a printer device, and/or a display device, and/or a user interface device, and/or a document scanner device to scan an identification document of the customer, and/or an Internet of Things (IoT) enabled device.

The central controller monitors the location 9 of the user device of the customer using one or more of a plurality of location identifiers to identify the location of the user device as the customer travels from the first physical location to the service provider device at the third physical location. In particular the central controller monitors the location of the user device using a first location identifier when the user device is located in a first physical area, and the central controller monitors the location of the user device using a second location identifier when the user device is located in a second physical area. For example the location identifier may be a beacon device, or a GPS device, or a Bluetooth device, or a near field communication (NFC) tapping device, or a facial recognition camera device, or a biometric data recognition device. The central controller transitions 10 from the first location identifier to the second location identifier based on the user device moving from the first physical area to the second physical area. The transition from the first location identifier to the second location identifier may depend on the capabilities of the communication session participants. For example a first channel may have the required functionality to use Bluetooth communication, and a second channel may have the required functionality to use both Bluetooth communication and GPS communication. The central controller performs a negotiation process to determine the optimum location identifier to use. The central controller also monitors the location 11 of the service provider device.

The central controller transmits a guide message 12 to the user device to guide the customer as the customer travels from the first physical location to the service provider device at the third physical location. The central controller determines whether the user device is in proximity to the service provider device.

When the customer arrives at the service provider device at the third physical location, the service provider device authenticates 13 the customer. For example the customer may be authenticated by prompting the customer to input a code at the service provider device, and/or by identifying the customer by image recognition using a video camera at the service provider device or using a video camera at the user device.

The service provider device has advance notice that the particular customer will be at the service provider device to receive a particular service. This pre-defined information enhances the security of the service at the service provider device. For example because the system has information of when a customer is scheduled to arrive at a teller machine, this pre-staging information allows for a higher number of factors/security claims. The factor/security claim may be a known location of the communication session, or a known time of the communication session, or a known participant in the communication session, or a known device taking part in the communication session, or a known identification feature such as clothes of a person in the communication session. The system enables more factors/security claims to be ascertained and thus allows for enhanced security.

When the customer has been authenticated, the service provider device fulfils the requested service 14 in accordance with the service execution message 8 from the central controller. For example the service provider device provides the special cash withdrawal with cash in large denomination banknotes to the customer.

The customer is only required to travel to the service provider device when the requested service has been processed by the central controller, for example when the special cash withdrawal with cash in large denomination banknotes is ready to be collected by the customer. This saves time for the customer and avoids the customer being required to wait for the service to be provided by a bank teller at an ATM machine. When the customer arrives at the service provider device, the service provider device is ready to fulfil the requested service. For example the customer is not required to scan an identification document when the customer reaches the service provider device. The system of the invention optimises usage of the customer time to avoid the customer being required to wait at the service provider device.

The system of the invention enables control of remotely located service provider devices. The teller is able to use the central controller to control these other remotely located service provider devices for the customer.

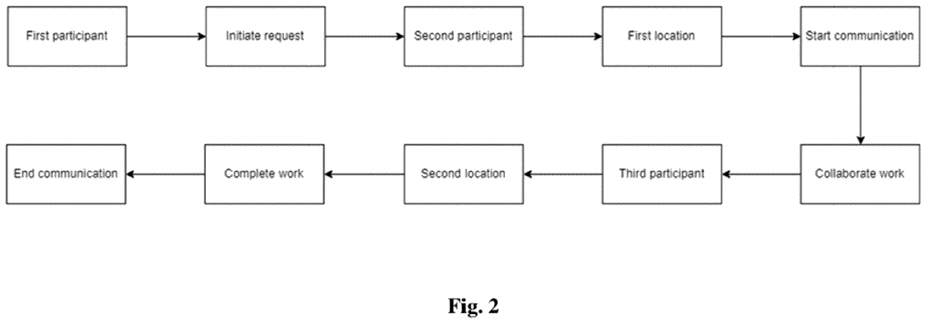

In Fig. 2 there is illustrated another data processing system according to the invention in use, which is similar to the data processing system of Fig. 1, and the data processing system of Fig. 2 operates in a similar manner to the description above.

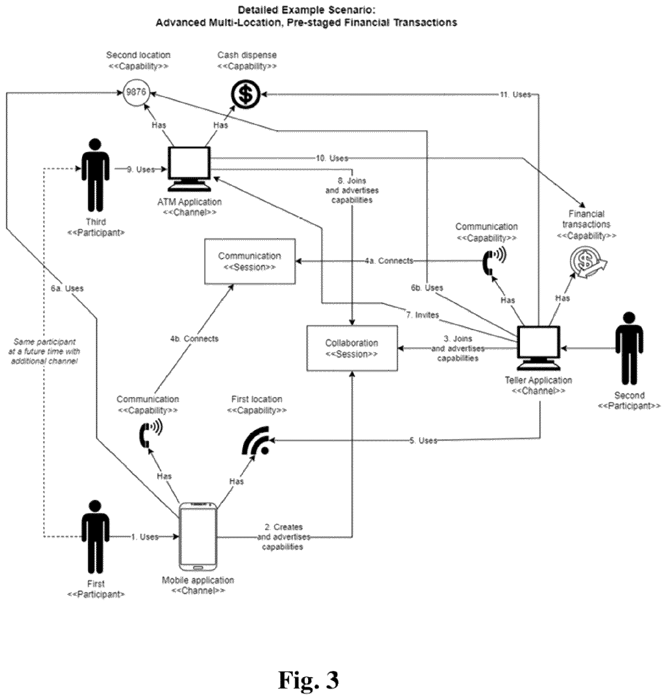

Fig. 3 illustrates another data processing system according to the invention in use, which is similar to the data processing system of Fig. 1, and the data processing system of Fig. 3 operates in a similar manner to the description above.

Throughout the description and claims of this patent specification, the words "comprise" and "contain" and variations of them mean "including but not limited to" and they are not intended to and do not exclude other moieties, additives, components, integers or steps. Throughout the description and claims of this patent specification, the singular encompasses the plural unless the context otherwise requires. In particular, where the indefinite article is used, the patent specification is to be understood as contemplating plurality as well as singularity, unless the context requires otherwise.

Although the present disclosure has been particularly shown and described with reference to the preferred embodiments and various aspects thereof, it will be appreciated by those of ordinary skill in the art that various changes and modifications may be made without departing from the spirit and scope of the disclosure. It is intended that the appended claims be interpreted as including the embodiments described herein, the alternatives mentioned above, and all equivalents thereto.

Features, integers, characteristics or groups described in conjunction with a particular aspect, embodiment or example of the invention are to be understood to be applicable to any other aspect, embodiment or example described herein unless incompatible therewith. All of the features disclosed in this patent specification including any accompanying claims, abstract and drawings, and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this patent specification including any accompanying claims, abstract and drawings, or to any novel one, or any novel combination, of the steps of any method or process so disclosed.

The reader's attention is directed to all papers and documents which are filed concurrently with or previous to this patent specification in connection with this patent application and which are open to public inspection with this patent specification, and the contents of all such papers and documents are incorporated herein by reference.

## Claims

1. A computer-implemented method for controlling a remote service, the method comprising the steps of:
receiving a service request message from a first communication session participant at a first physical location,
processing a requested service based on the service request message,
wherein the processing is performed by a second communication session participant at a second physical location, and
transmitting a service execution message to a third communication session participant at a third physical location to fulfil the requested service.

2. A method as claimed in claim 1 wherein the method comprises the steps of:
receiving a communication session initiation request message from the first communication session participant, and
initiating a communication session based on the communication session initiation request.

3. A method as claimed in claim 1 or claim 2 wherein the method comprises the steps of:
determining a period of time required to process the requested service, and
transmitting a notification message to the first communication session participant when the requested service will be available.

4. A method as claimed in any preceding claim wherein the method comprises the steps of:
determining a location of the first communication session participant,
determining a location of the third communication session participant, and
determining whether the first communication session participant is in proximity to the third communication session participant.

5. A method as claimed in claim 4 wherein the method comprises the step of transmitting a guide message to the first communication session participant to guide the first communication session participant to the third communication session participant.

6. A method as claimed in claim 4 or 5 wherein the location of the first communication session participant is determined using a first location identifier when the first communication session participant is located in a first physical area, and the location of the first communication session participant is determined using a second location identifier when the first communication session participant is located in a second physical area; and optionally
the method comprises the step of transitioning from the first location identifier to the second location identifier based on the first communication session participant moving from the first physical area to the second physical area.

7. A method as claimed in any preceding claim wherein the method comprises the step of:
authenticating the first communication session participant at the third communication session participant,
responsive to the first communication session participant being authenticated, the third communication session participant fulfilling the requested service.

8. A method as claimed in any preceding claim wherein the first physical location is located remotely from the second physical location.

9. A method as claimed in any preceding claim wherein the first physical location is located remotely from the third physical location.

10. A method as claimed in any preceding claim wherein the second physical location is located remotely from the third physical location.

11. A method as claimed in any preceding claim wherein the first communication session participant comprises a customer.

12. A method as claimed in any preceding claim wherein the second communication session participant comprises at least one of a bank teller, an automated machine, a machine learning tool, or a computer program.

13. A method as claimed in any preceding claim wherein the third communication session participant comprises at least one of a teller machine, a cash dispenser device, a printer device, a display device, a user interface device, a document scanner device, or an Internet of Things (IoT) enabled device.

14. A data processing system for controlling a remote service, the system comprising a processor configured to:
receive a service request message from a first communication session participant at a first physical location,
process a requested service based on the service request message, and
transmit a service execution message to a third communication session participant at a third physical location to fulfil the requested service.

15. A computer program product stored on a non-transitory computer readable storage medium, the computer program product comprising instructions capable of causing a computer system to perform a method as claimed in any one of claims 1 to 13 when the computer program product is executed on the computer system.
